# EUROPÄISCHE PATENTSCHRIFT

(11) **EP 3 126 144 B1**
(45) Veröffentlichungstag und Bekanntmachung des Hinweises auf die Patenterteilung: **20.02.2019**
(21) Anmeldenummer: 15713310.9
(22) Anmeldetag: 25.03.2015
(51) Int. Cl.: B32B 29/00, B32B 29/06, B32B 3/30, B44C 5/04, B44B 5/00

(54) **SCHICHTSTOFF UND VERFAHREN ZU DESSEN HERSTELLUNG**
LAMINATE AND METHOD FOR PRODUCING SAME
MATÉRIAU STRATIFIÉ ET PROCÉDÉ POUR LE FABRIQUER

(30) Priorität: 03.04.2014 DE 102014104760
(43) Veröffentlichungstag der Anmeldung: 08.02.2017
(73) Patentinhaber: Fritz Egger GmbH & Co. OG, 6380 St. Johann in Tirol (AT)
(72) Erfinder: SCHIEGL, Walter, A-6380 St. Johann in Tirol (AT)
(74) Vertreter: Cohausz & Florack
(86) Internationale Anmeldenummer: PCT/EP2015/056434
(87) Internationale Veröffentlichungsnummer: WO 2015/150192

(56) Entgegenhaltungen:
- WO-A1-2011/076916
- DE-A1- 10 316 884
- DE-A1- 19 942 972
- US-A- 3 738 900
- US-A- 4 062 992
- US-A- 4 140 837
- "Siempelkamp-Kurztaktpressen: Standard, HIgh-End, Eco: Drei KOnzepte machen Druck", , 1. Januar 2013 (2013-01-01), XP055106013, Gefunden im Internet: URL:http://www.siempelkamp.com/fileadmin/m edia/Deutsch/MaschinenundAnlagen/Produkte/ holzplattenanlagen/Bulletin_II_12_de_S.58_ 63_Kurztaktpressen.pdf [gefunden am 2014-03-06]

## Beschreibung

Die Erfindung betrifft Schichtstoff zum Aufbringen auf einem Trägermaterial, insbesondere auf eine Trägerplatte, mit einer harzimprägnierten Dekorschicht und mit mindestens einer harzimprägnierten Kernschicht, wobei die Dekorschicht und die mindestens eine Kernschicht geeignet sind, um unter hohem Druck und Wärme mittels einer Vielkolben-Kurztaktpresse miteinander verpresst zu werden. Die Erfindung betrifft auch ein Verfahren zur Herstellung eines Schichtstoffs.

Aus dem Stand der Technik der DE 199 42 972 A1, DE 103 16 884 A1, US 3,738,900 A, US 4,062,992 und US 4,140,837 A bekannte Schichtstoffe sind ein vielseitig einsetzbarer Werkstoff, der in Kombination mit Holzwerkstoffen oder anderen Trägermaterialien, zu so genannten Verbundelementen verarbeitet wird. Die Anwendungen sind vielfältig und erfordern den Einsatz verschiedener Schichtstoffqualitäten, die auf die späteren Einsatzgebiete abzustimmen sind. Klassische Anwendungen bzw. Einsatzbereiche sind z.B. Küchenindustrie, Türenindustrie, Büromöbelindustrie, Messebau, Ladenbau, dekorativer Innenausbau, Fußböden, Schiffsbau und Fahrzeugbau. Unter Schichtstoffen werden somit dekorative Schichtstoffe verstanden, die unterschiedlichen Anforderungen genügen können. So gibt es bspw. Schichtstoffe in Standard-Qualität, nachformbare dekorative Schichtstoffe, die bei höheren Temperaturen auch geformt werden können, oder dekorative Schichtstoffe mit verbessertem Brandverhalten.

Die Schichtstoffe sind dekorative Schichtstoffe auf Basis härtbarer Harze. Sie sind mehrschichtig aufgebaut und bestehen bspw. zumindest aus einem melaminharzimprägnierten Dekorpapier als Dekorschicht und einem oder mehreren mit Phenolharz imprägnierten Natronkraftpapieren als Kernschichten, die unter hohem Druck und Wärme miteinander verpresst werden. Der Schichtstoffaufbau, Harz- und Papierqualitäten, Oberflächenstrukturen, die Verwendung spezieller Overlays (Schutzschichten) sowie die Pressparameter bei der Herstellung entscheiden über die Schichtstoffqualität und somit über die spätere Anwendung bzw. das Einsatzgebiet.

Die dekorative Seite des Schichtstoffes, die Dekorschicht, kann aus Dekorpapier bestehen, das als Holzdekor oder Fantasiedekor bedruckt wird, oder aus Uni- oder Weißdekoren, die bspw. als Kunststoffschichten ausgebildet sind. Die Flächengewichte der Dekorpapiere liegen in der Regel zwischen 50 - 160 g/m².

Ein wesentlicher Bestandteil von Schichtstoffen können Kernpapiere, bspw. Natronkraftpapiere sein, die auch als Kernschichten oder Kernlagen bezeichnet werden. Das Flächengewicht der Kernpapiere bzw. Natronkraftpapiere liegt im Bereich von 70 - 300 g/m², wobei hohe Grammaturen vorwiegend für Kompaktplatten verwendet werden.

Ein Overlay ist ein gebleichtes, transparentes Papier mit hohem Harzaufnahmevermögen und wird zum Schutz des Dekors, insbesondere des Druckbildes von bedruckten Dekorpapieren und zur Verbesserung der Abriebbeständigkeit eingesetzt.

Ein Underlay oder Barrierepapier ist eine Papierlage zwischen Dekor- und Kernpapier bzw. Natronkraftpapier, das zur Verhinderung chemischer Beeinflussung zwischen den Harzen oder zur Erzielung optischer Effekte verwendet wird.

Melamin-Formaldehyd-Harze ergeben transparente und harte Beschichtungen und sind daher bestens als Oberflächenschicht von dekorativen Schichtstoffen geeignet. Zur Imprägnierung der Kernlagen werden, nicht zuletzt aus Kostengründen, relativ elastische Phenol-Formaldehyd-Harze eingesetzt.

Dekorative Schichtstoffe können also aus Zellulosefaserbahnen bzw. Papier, die mit wärmehärtenden Harzen imprägniert sind, bestehen. Andere natürliche oder künstliche Materialien können ebenfalls als Trägermaterial für den Harz eingesetzt werden. So sind Schichtstoffe aus mit Harz imprägnierten Glasfaservliesen ebenfalls bekannt. Die Schichten, vorzugsweise die Papierschichten werden mit den nachfolgend beschriebenen Herstellverfahren miteinander zum Schichtstoff verbunden. Die Zufuhr von Wärme und Druck bewirkt dabei ein Fließen und anschließendes Aushärten der Harze. Durch die Vernetzung der Harze, vorzugsweise verstärkt durch die Zellulosefasern der Papiere, entsteht ein sehr dichtes Material mit geschlossener Oberfläche. Dabei können einzelne Papierschichten, auch eine äußere Papierschicht, vor dem Verpressen unbeharzt sein, da beim Verpressen der Harz auch zuvor unbeharzte Schichten durchdringt.

Zu Beginn des Verfahrens werden die Schichten des Schichtaufbaus übereinander gelegt und anschließend zwischen zwei Pressmittel in Form von Presseblechen oder Pressbändern gebracht. Diese Pressmittel sind auf eine vorgegebene Temperatur aufgeheizt, so dass während des Pressvorgangs nicht nur ein ausreichender Druck sondern auch die benötigte Temperatur auf die Schichten aufgebracht wird. Das Hochdruckverfahren ist also durch die gleichzeitige Anwendung von Wärme (Temperatur ≥ 120 °C) und einem hohen Druck (≥ 25 bar) bestimmt, damit die wärmehärtbaren Harze fließen und anschließend aushärten, um einen homogenen, nicht porösen Werkstoff mit erhöhter Dichte (≥ 1,35 g/cm³) und der geforderten Oberflächenbeschaffenheit herzustellen.

Die zuvor genannten Pressmittel weisen in der Regel eine sehr glatte Oberfläche auf, um eine entsprechend glatte und somit glänzende Oberfläche des Schichtstoffs zu erreichen. Ebenso ist bekannt, das auf der Seite der Dekorschicht anliegende Pressmittel mit einer makroskopischen Struktur zu versehen, um eine sichtbare, möglicherweise mit dem Dekor synchron verlaufende Oberflächenstruktur auf dem Dekor zu erzielen. Dieses führt zusammen mit dem Dekor zu einer verbesserten naturnahen Oberflächenerscheinung. Bei der Endlosfertigung mittels Doppelbandpresse ist die Herstellung von Synchronstrukturen aufgrund des schwankenden Papierwachstums und aufgrund des Schlupfes zwischen Stahlband und Werkstück jedoch nicht oder nur unter erschwerten Bedingungen möglich. Bei Mehretagenpressen müssten dagegen je Struktur Pressbleche entsprechend der Etagenanzahl der Presse zur Verfügung stehen, was äußerst unwirtschaftlich ist.

Als Herstellverfahren sind CPL-Verfahren, CPL ist die Abkürzung für Continuous Pressed Laminates, und HPL-Verfahren, HPL ist die Abkürzung für High Pressure Laminates, bekannt.

CPL wird in kontinuierlich arbeitenden Doppelbandpressen mit einem Pressdruck zwischen 25 und 50 bar und Temperaturen zwischen 150 °C und 170 °C hergestellt. Abhängig von der Schichtstoffdicke und der Presszonenlänge variiert die Vorschubgeschwindigkeit zwischen 8 und 30 m/min.

HPL wird bisher in diskontinuierlich arbeitenden Mehretagenpressen hergestellt, wobei eine Mehrzahl von Einheiten aus zwei Pressblechen und dazwischen angeordneten Schichten übereinander gestapelt sind, die durch einen einzigen Pressvorgang mit einem Pressdruck zwischen 70 und 80 bar und Temperaturen von über 120 °C verpresst werden. Die Etagenpressen können bis zu 45 Etagen haben und jede Etage wird mit bis zu 24 Schichtstofflagen (Dicke ca. 0,50 bis 1,90 mm) gefüllt. Abhängig von der Pressenbeschickung und der maximalen Temperatur dauert der komplette Presszyklus inkl. einer optionalen Rückkühlung etwa 100 Minuten.

Die Längen- und Breitenformatierung von HPL erfolgt in gesonderten Arbeitsschritten vor dem Verpressen, wobei sich Materialien mit einer Breite von bis zu etwa 1300 mm herstellen lassen. CPL hingegen kann direkt online nach der Presse sowohl in der Breite geschnitten und /oder auf Länge formatiert oder auf Rolle gewickelt werden. Die maximale Breite von CPL liegt dabei im Bereich von 1300 mm.

Des Weiteren sind Kurztaktpressen bekannt, mit denen Trägermaterialien wie Holzwerkstoffplatten mit Schichtstoffen beschichtet werden können. Schichtstoffe der vorliegenden Art können allein auf den bekannten Kurztaktpressen bislang nicht verpresst werden, weil die dünnen Schichtstoffe keine Pressdruckunterschiede über die Fläche hinweg ausgleichen können. Denn bei herkömmlichen Kurztaktpressen ergeben sich deutliche Unterschiede im Pressdruck, nicht zuletzt wegen der zu ungenauen Ansteuerung der Presszylinder. Bei Trägermaterialien mit ausreichender Dicke können diese Pressdruckunterschiede jedoch durch das Trägermaterial, bspw. einer Spanplatte oder einer MDF-Platte (mitteldichte Faserplatte) gut ausgeglichen werden.

Des Weiteren ist eine Vielkolbenpresse, bspw. die KT 700 von der Firma Siempelkamp bekannt. Gegenüber bislang installierten Pressen verwendet die Vielkolbenpresse mehrere kleine Hydraulikzylinder, die ihrerseits individuell angesteuert werden können. Somit lassen sich geringste Toleranzen in der Parallelität der Pressbleche erzielen, so dass eine höchst regelmäßige Verteilung des Pressdrucks erreicht wird. Diese Presse wird aber bisher auch nur zur Beschichtung von Holzwerkstoff-Trägerplatten oder zur Herstellung von Kompaktplatten verwendet. Insbesondere sind werkseitig durch mechanische Abstandhalter Mindestabstände von mehr als 2 mm vorgegeben, die ein Verpressen von Schichtstoffen unmöglich machen.

Nach der Herstellung des Schichtstoffes wird dieser, meistens in einem separaten Verfahrensschritt und mit zeitlicher Verzögerung, mit einem Trägermaterial bzw. einer Trägerplatte verklebt. Um Schichtstoffe mit einer Trägerplatte besser verkleben zu können, werden deren Rückseiten geschliffen. Durch den Schliff wird eine Oberflächenstruktur geschaffen, die gut benetzbar ist. Nachteilig am Abschleifen der Rückseite ist jedoch, dass der Schichtstoff dadurch unsymmetrisch wird und dazu neigt, sich zu wölben. Daher müssen recht umfangreiche Lager- und Manipulationsmaßnahmen und besondere Vorkehrungen getroffen werden. Zusätzlich wird auch die Verarbeitung dadurch wesentlich erschwert.

Zudem führt das Schleifen zu einem zumindest teilweisen, vorzugsweise nahezu vollständigem Abtragen der obersten Harzschicht, so dass die darunter angeordnete Papierschicht zumindest teilweise freigelegt wird. Die Oberflächenspannung wird also verringert und die Benetzbarkeit der Oberfläche verändert sich. Feuchtigkeit kann daher während einer Lagerung in den Schichtstoff eindringen, bevor der Klebstoff kurz vor der Verarbeitung aufgetragen werden kann. Außerdem kann der Klebstoff zumindest teilweise zu tief in den Schichtaufbau eindringen, so dass für das Verkleben mit der Trägerplatte mehr Klebstoff als notwendig eingesetzt werden muss.

Der vorliegenden Erfindung liegt daher das technische Problem zugrunde, einen Schichtstoff zum Aufbringen auf einem Trägermaterial, insbesondere auf eine Trägerplatte, und ein Verfahren zur Herstellung eines Schichtstoffs derart auszugestalten und weiterzubilden, dass zumindest einer der zuvor genannten Nachteile behoben wird.

Das zuvor aufgezeigte technische Problem wird erfindungsgemäß durch einen Schichtstoff gelöst, bei dem die Dicke des Stapels der Dekorschicht und der mindestens einen Kernschicht nach dem Verpressen weniger als 2 mm beträgt und dass die Dekorschicht und die mindestens eine Kernschicht eine Breite von mehr als 1800 mm aufweisen.

Des Weiteren können die Dekorschicht und die mindestens eine Kernschicht eine Länge von bis zu 5600 mm aufweisen. Dabei beträgt die Dicke des Stapels der Dekorschicht und der mindestens einen Kernschicht nach dem Verpressen vorzugsweise weniger als 1,5 mm und dass vorzugsweise die Dekorschicht und die mindestens eine Kernschicht eine Breite von mehr als 2000 mm aufweisen.

Solche erfindungsgemäßen großflächigen Schichtstoffe können beispielsweise für Tisch- und Arbeitsflächen mit einer größeren Breite oder auch im Messebau, wo größere Elemente zur Verkleidung von Flächen benötigt werden, eingesetzt werden.

Des Weiteren können in vorteilhafter Weise zur Herstellung des Schichtstoffs die gleichen Strukturbleche eingesetzt werden, wie sie für die Direktbeschichtung von Holzwerkstoff-Trägerplatten verwendet werden. Bei der Direktbeschichtung wird auf die Trägerplatten nicht ein Schichtstoff aufgebracht, sondern mit Kunstharz imprägnierte Dekorpapiere, gegebenenfalls mit einem zusätzlichen Under- und/oder Overlaypapier, werden direkt mit der Trägerplatte verpresst. Auch dabei kann ein Pressbleches verwendet werden, um eine makroskopische Struktur einzuprägen.

Erfindungsgemäß können erstmals Schichtstoffe mit der identischen Struktur angeboten werden, wie sie bei den direkt beschichteten Platten eingesetzt wird. Neben dem damit gewährleisteten, exakten Strukturverbund erübrigt sich damit auch die teure Anschaffung von verschiedenen Presswerkzeugen, wie sie beim Betrieb von verschiedenen Anlagen erforderlich wäre. Somit können unterschiedliche Strukturen in größerer Vielfalt angeboten werden, da die Investitionskosten je Struktur entsprechend geringer ausfallen.

Insbesondere ergibt sich gegenüber den bislang verwendeten Mehretagenpressen und Doppelbandpressen der Vorteil, in wirtschaftlicher Weise Synchronstrukturen einzuprägen. Unter Synchronstrukturen werden makroskopische Strukturen verstanden, die eine sichtbare mit dem Dekor im Wesentlichen ggf. nur abschnittsweise synchron verlaufende Oberflächenstruktur auf dem Dekor hervorrufen und während des Verpressens in die Oberfläche des Schichtstoffs eingeprägt werden. Darüber hinaus können die für die Herstellung von beschichteten Holzwerkstoffplatten verwendeten Vorrichtungen zur Ausrichtung von Papier und Presswerkzeug ohne irgendeine Adaptierung auch für Schichtstoffe verwendet werden.

In weiter bevorzugter Weise ist die Oberfläche der der Dekorschicht gegenüberliegend angeordneten Schicht mit einer geprägten Struktur versehen, entspricht die geprägte Struktur in Tiefe und Geometrie einer durch Schleifen hergestellten Struktur und entspricht die Geometrie der geprägten Struktur einer Schleifriefenstruktur. Dadurch wird eine Oberfläche erreicht, die ähnlich einer geschliffenen Oberfläche gut verklebt werden kann, ohne dass es durch den Vorgang des mechanischen Schleifens der Oberfläche zu einer unregelmäßigen Oberfläche oder zu einer Asymmetrie des Schichtaufbaus kommt. Unter einer Struktur, die im Wesentlichen einer durch Schleifen hergestellten Struktur entspricht, wird im Wesentlichen einer durch Schleifen hergestellten Struktur entspricht, wird im Rahmen dieser Erfindung eine Struktur verstanden, deren Dimensionen vergleichbar mit den Dimensionen einer durch mechanisches Schleifen erzeugten Struktur sind.

Durch das Einprägen der Struktur während der Herstellung des Schichtstoffs wird die oberste Harzschicht moduliert und bleibt als durchgängige und somit versiegelnde Schicht bestehen, so dass trotz des Einbringens der Struktur in der Oberfläche während einer anschließenden Lagerung keine Feuchtigkeit in den Schichtstoff eindringen kann. Der für das Verarbeiten des Schichtstoffs notwendige Klebstoff kann daher in einer geringeren Menge aufgetragen werden, als bei einer oben beschriebenen geschliffenen Oberfläche mit geringer Oberflächenspannung. Dabei müssen keine Qualitätseinbußen bei der Verarbeitung während des Aufklebens auf der Trägerplatte hingenommen werden.

Als Maß und somit als Unterscheidungsmerkmal für die Beschaffenheit der Oberfläche des geprägten Schichtstoffs gegenüber einem geschliffenen Schichtstoff kann die Benetzbarkeit herangezogen werden. Die Benetzbarkeit hängt von der Oberflächenspannung der Oberfläche ab, wobei als Maß der sogenannte Kontaktwinkel gemessen werden kann. Die Größe des Kontaktwinkels zwischen Flüssigkeit und Oberfläche hängt von der Wechselwirkung zwischen der Flüssigkeit und der Oberfläche an der Berührungsfläche ab. Je geringer diese Wechselwirkung ist, desto größer wird der Kontaktwinkel. Aus der Bestimmung des Kontaktwinkels kann somit ein Maß für die Benetzbarkeit bestimmt werden.

Tatsächlich geschliffene Oberflächen, wie sie oben als Stand der Technik beschrieben worden sind, weisen eine geringe Oberflächenspannung und somit eine gute Benetzbarkeit auf. Bei Aufbringen eines Leitungswassertropfens bei Raumtemperatur mit einem maximalen Durchmesser von 15 mm nimmt der Kontaktwinkel einen geringen Wert im Bereich kleiner 20° oder kleiner 10° an. Bei einer geprägten Oberfläche liegt der Kontaktwinkel eines gleichen Wassertropfens oberhalb von 40°, insbesondere oberhalb von 50°. Zur Durchführung der Messung des Kontaktwinkels und zur Charakterisierung der spezifischen Eigenschaften des Leitungswassers wird auf die spezielle Beschreibung verwiesen.

Ein weiteres Unterscheidungsmerkmal zwischen einem Schichtstoff mit einer geprägten Struktur und einer tatsächlich geschliffenen Schichtstoffoberfläche besteht darin, ob und wie stark Wasser in durch die Oberfläche in den Schichtstoff eindringt. Bei einer geprägten Oberfläche perlt ein aufliegender Wassertropfen ab und das Wasser dringt nicht bzw. nur unmerklich in den Schichtstoff ein, weil die oberste beharzte Schicht eine eingeprägte Struktur aufweist, so dass die beharzte Schicht als solche mit Struktur durchgängig erhalten bleibt. Bei einer geschliffenen Oberfläche eines Schichtstoffes, dessen äußere Schicht aus einem mit Harz imprägnierten, aber an sich wasserabsorbierenden Material, wie beispielweise Papier, besteht, dringt das Wasser des aufliegenden Wassertropfens durch die geschliffene Oberfläche in den Schichtstoff ein. Denn durch das Schleifen der Oberfläche wird die durchgängige Harzschicht verletzt und abschnittweise vollständig entfernt, so dass die wasserabsorbierende Schicht freiliegt. Im Bereich um den Wassertropfen herum entstehen dadurch gut sichtbare nasse Bereiche des Schichtstoffes.

Bei einer bevorzugten Ausgestaltung des Schichtstoffs entspricht die geprägte Struktur in Tiefe und/oder Geometrie einer durch Schleifen hergestellten Struktur, wobei vorzugsweise die Tiefe der geprägten Struktur eine mittlere Rauigkeit von kleiner als 20 µm, insbesondere kleiner 10 µm aufweist und/oder wobei die Geometrie der geprägten Struktur einer Schleifriefen-Struktur, insbesondere aus parallel gerichteten Riefen, entspricht.

Somit sind auch Strukturen umfasst, die zwar eine Rauigkeit von weniger als 20 µm aufweisen, die jedoch nicht in Form von Riefen, sondern in davon unterschiedlichen geometrischen, vorzugsweise runden oder polygonen Formen ausgebildet sind. Ebenso sind damit Strukturen gemeint, die zwar eine Geometrie entsprechend einer Schleifriefen-Struktur aufweisen, deren Rauigkeit jedoch zumindest teilweise größer als 20 µm ist. Bevorzugt ist jedoch eine Kombination beider Merkmale.

In weiter bevorzugter Weise kann die der als Dekorpapier ausgebildeten Dekorschicht gegenüberliegend angeordnete Schicht als ein in seinen Eigenschaften im Wesentlichen dem Dekorpapier entsprechenden Gegenzugpapier ausgebildet sein. Dadurch kann ein Wölben oder Verformen des Schichtstoffes aufgrund unterschiedlicher mechanischer Spannungen verringert oder gar vermieden werden. In bevorzugter Weise ist die dem Dekorpapier gegenüberliegend angeordnete Schicht mit einem Harz imprägniert, das in seinem Zugverhalten dem Harz entspricht, das für die Imprägnierung des Dekorpapiers angewendet wird, das vorzugsweise vom gleichen Typ ist.

Die zuvor erläuterten Schichten sind vorzugsweise, wie oben erläutert, aus Papierschichten, also Dekorpapier, Kraftpapier als Kernschichten, Gegenzugpapier oder Overlaypapier. Jedoch ist die Erfindung nicht auf die Anwendung verschiedener Papierschichten begrenzt. So können bspw. auch Kunststoffschichten oder Materialien aus natürlichen Stoffen, vorzugsweise aus Holz oder Gewebe, zumindest teilweise zum Aufbau des Schichtstoffes beitragen.

Wie oben bereits erwähnt wurde, benötigt man für die Herstellung eines Schichtstoffes Pressmittel, die über eine vorgegebene Zeitspanne einen ausreichenden Druck und eine vorgegebene Presstemperatur auf den Schichtstoff ausüben. Bevorzugt werden zur Herstellung der erfindungsgemäßen Schichtstoffe Pressmittel mit einer Pressoberfläche mit einer Struktur eingesetzt, die im Wesentlichen einer durch Schleifen hergestellten Struktur entspricht.

Dabei kann auch hier, wie bereits zuvor erläutert worden ist, die zum Prägen der unteren Schicht des Schichtstoffes verwendete Struktur in Tiefe und/oder Geometrie einer durch Schleifen hergestellten Struktur entsprechen, insbesondere die Tiefe der Struktur eine mittlere Rauigkeit von kleiner als 20 µm, insbesondere kleiner 10 µm aufweisen und/oder vorzugsweise die Geometrie der Struktur einer Schleifriefen-Struktur, insbesondere aus parallel gerichteten Riefen aufweisen.

Das oben aufgezeigte technische Problem wird auch durch ein Verfahren zur Herstellung eines Schichtstoffs gelöst, bei dem eine harzimprägnierte Dekorschicht und mindestens eine harzimprägnierte Kernschicht aufeinander geschichtet werden und bei dem die Dekorschicht und die mindestens eine Kernschicht unter hohem Druck und Wärme miteinander verpresst werden, bei dem die Dekorschicht und die mindestens eine Kernschicht eine Breite von mehr als 1800 mm, vorzugsweise eine Breite von mehr als 2000 mm aufweisen und bei dem die Dekorschicht und die mindestens eine Kernschicht mit einer einstufigen Vielkolben-Kurztaktpresse verpresst werden.

Des Weiteren ist bevorzugt, dass die der Dekorschicht gegenüberliegend angeordnete Schicht mit einem Pressmittel mit einer Struktur verpresst und geprägt wird, wobei die Struktur im Wesentlichen einer durch Schleifen hergestellten Struktur entspricht.

Die Erfindung wird im Folgenden anhand von Ausführungsbeispielen näher erläutert, wobei auf die beigefügte Zeichnung Bezug genommen wird. In der Zeichnung zeigen
- Fig. 1: einen Aufbau eines ersten Schichtstoffes vor dem Verpressen,
- Fig. 2: einen Aufbau eines ersten Schichtstoffes vor dem Verpressen,
- Fig. 3: einen fertigen Schichtstoff vor dem Verpressen mit einer Trägerplatte,
- Fig. 4: eine schematische Darstellung einer Taktpresse mit einem erfindungsgemäßen Pressblech
- Fig. 5: ein Prinzipschaubild zur Erläuterung des Begriffs Kontaktwinkel,
- Fig. 6: eine schematische Darstellung eines Wassertropfens auf der Oberfläche eines geprägten Schichtstoffs in einer schrägen Draufsicht,
- Fig. 7: eine schematische Darstellung eines Wassertropfens auf der Oberfläche eines geprägten Schichtstoffs in einer Seitenansicht zur Bestimmung des Kontaktwinkels,
- Fig. 8: eine schematische Darstellung eines Wassertropfens auf einer geschliffenen Oberfläche eines Schichtstoffs (Stand der Technik) in einer schrägen Draufsicht und
- Fig. 9: eine schematische Darstellung eines Wassertropfens auf einer geschliffenen Oberfläche eines Schichtstoffs (Stand der Technik) in einer Seitenansicht zur Bestimmung des Kontaktwinkels.

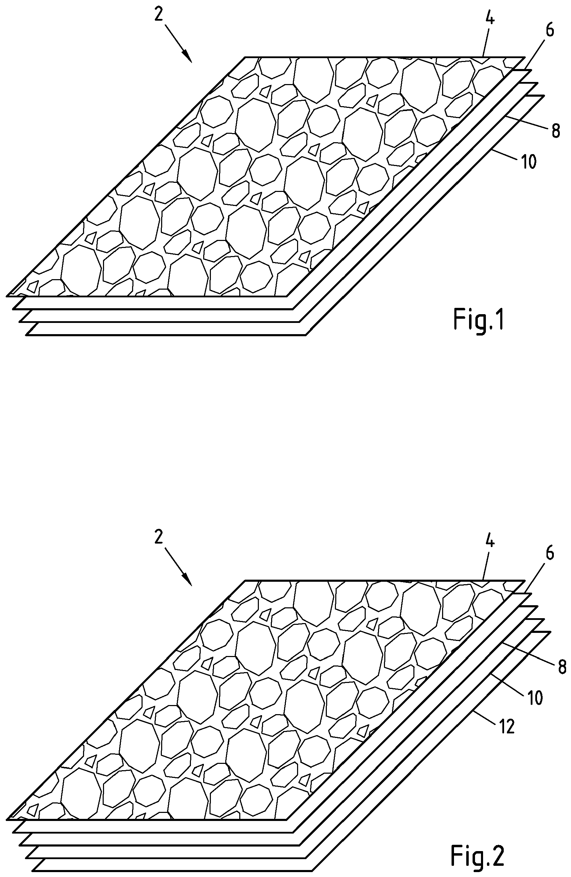

Fig. 1 zeigt einen Schichtaufbau eines Schichtstoffes 2 zum Aufbringen auf einem Trägermaterial, insbesondere auf eine Trägerplatte, vor dem Verpressen. Der Schichtstoff 2 weist ein harzimprägniertes Dekorpapier 4 als Dekorschicht und drei harzimprägnierte Kraftpapieren 6, 8, und 10 als Kernschichten auf. Das Dekorpapier 4 und die Kernpapiere 6, 8 und 10 sind geeignet, um unter hohem Druck und Wärme miteinander verpresst zu werden. Dadurch wird der gewünschte Schichtstoff 2 hergestellt. Das Dekorpapier 4 weist auf der Oberseite ein optisches Muster als Dekor auf. Anstelle des bedruckten Dekorpapiers 4 kann auch ein einfarbiges Dekorpapier verwendet werden.

Erfindungsgemäß sind die Dekorschicht 4 und die mindestens eine Kernschicht 6, 8, 10 mittels einer Kurztaktpresse 40 verpressbar, die nachfolgend noch im Detail erläutert wird, und die Dekorschicht 4 und die mindestens eine Kernschicht 6, 8, 10 weisen eine Breite von mehr als 1800 mm, insbesondere mehr als 2000 mm auf. Des Weiteren weisen die Dekorschicht 4 und die mindestens eine Kernschicht 6, 8, 10 eine Länge von bspw. 5600 mm auf. Schließlich beträgt die Dicke des Stapels der Dekorschicht 4 und der mindestens einen Kernschicht 6, 8, 10 nach dem Verpressen weniger als 2 mm, vorzugsweise weniger als 1,5 mm.

Darüber hinaus wird das dem Dekorpapier 4 gegenüberliegend angeordnete Kraftpapier 10 während des Verpressens mit einer geprägten Struktur versehen, die im Wesentlichen einer durch Schleifen hergestellten Struktur entspricht. Die geprägte Struktur verleiht der Oberfläche der Schicht 10 eine vergrößerte Fläche, so dass das Verkleben mit einer Trägerplatte verbessert wird.

Fig. 2 zeigt ein zweites Ausführungsbeispiel eines erfindungsgemäßen Schichtaufbaus eines Schichtstoffes 2, hier mit einer als Gegenzugschicht ausgebildeten untersten Schicht 12. In diesem Fall wird die Gegenzugschicht 12 als unterste Schicht während des Verpressens mit der geprägten Struktur versehen. Um ein Verziehen eines solcherart aufgebauten Schichtstoffes weiter zu minimieren, ist die Gegenzugschicht bzw. das Gegenzugpapier mit einem Harz imprägniert, das ein ähnliches Zugverhalten aufweist wie jenes, das für die Imprägnierung des Dekorpapiers angewendet wird. Vorzugsweise wird dasselbe Harz, insbesondere Melaminharz verwendet.

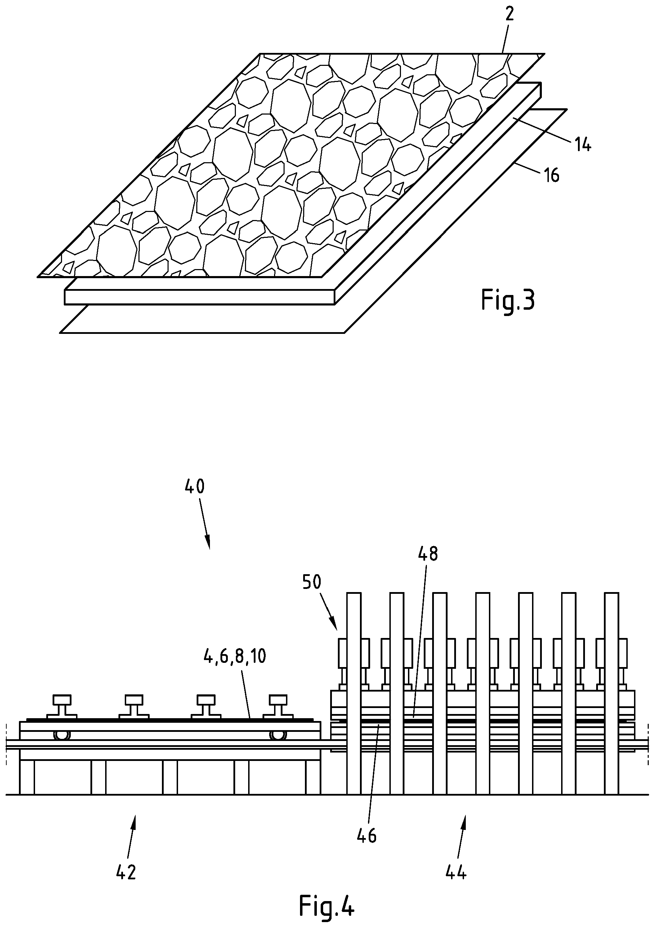

Fig. 3 zeigt einen erfindungsgemäß hergestellten Schichtstoff 2 im Stapel mit einer Trägerplatte 14 aus Holzwerkstoff, bspw. MDF-Platte (mitteldichte Faserplatte) oder HDF-Platte (hochdichte Faserplatte) und einer unterhalb der Trägerplatte 14 angeordneten Gegenzugschicht 16. Dieser Stapel wird dann in einer Presse unter Anwendung von Druck und Temperatur zu einer beschichteten Holzwerkstoffplatte weiter verarbeitet.

Die geprägte Struktur der untersten Schicht 10 bzw. 12 entspricht in Tiefe und/oder Geometrie einer durch Schleifen hergestellten Struktur. Dabei kommt es nicht auf identische Geometrien und/oder identische Topographien, also auf eine echte Kopie einer durch mechanisches Schleifen hergestellten Struktur an. Denn die erfindungsgemäße Wirkung der Oberfläche wird dann erreicht, wenn gleiche mechanische Dimensionierungen eingehalten werden. Denn diese Dimensionierungen sind maßgeblich für die guten Klebeeigenschaften verantwortlich.

So wird bspw. die Tiefe der geprägten Struktur mit einer mittleren Rauigkeit von kleiner als 20 µm, insbesondere kleiner 10 µm gewählt, die auch bei einem typischen Schleifvorgang erzeugt wird. Gleichzeitig oder alternativ entspricht die Geometrie der geprägten Struktur einer Schleifriefen-Struktur, insbesondere aus parallel gerichteten Riefen.

Nachfolgend wird ein Beispiel für eine erfindungsgemäße Struktur in Form einer Tabelle angegeben, wobei die Struktur mit gängigen Parametern charakterisiert worden ist. Die Messung erfolgte mit einem flächenbasierten Verfahren zur 3D Oberflächenmessung gemäß EN ISO Standard 25178. Insbesondere ist dabei die Fokus-Variation als flächenbasiertes Messverfahren angewendet worden.

| **Name** | **Wert** | **[u]** | **Beschreibung** |
|---|---|---|---|
| Ra | 1.25 | µm | Mittlere Rauheit des Profils |
| Rq | 8.45 | µm | Quadratischer Mittelwert der Rauheit des Profils |
| Rt | 43.9 | µm | Gesamthöhe des Rauheitsprofil |
| Rz | 28.8 | µm | Gemittelte Höhe des Rauheitsprofil |
| Rmax | 34.0 | µm | Maximale Höhe des Rauheitsprofil innerhalb einer Einzelmessstrecke |
| Rp | 21.2 | µm | Höhe der größten Profilspitze des Rauheitsprofil |
| Rv | 22.7 | µm | Tiefe des größten Profiltales des Rauheitsprofil |
| Rc | 25.6 | µm | Mittlere Höhe der Profilunregelmäßigkeiten des Rauheitsprofil |
| Rsm | 364 | µm | Mittlerer Abstand der Profilunregelmäßigkeiten des Rauheitsprofil |

Fig. 4 zeigt nun eine Presse 40 zur Herstellung von Schichtstoffen, die nach dem HPL-Kurztaktverfahren arbeitet. Im linken Bereich der Fig. 4 ist eine Stapelvorrichtung 42 dargestellt, in der die mehreren Schichten 4 bis 10 des zu bildenden Schichtstoffs 2 gemäß dem Ausführungsbeispiel nach Fig. 2 aufeinander gestapelt werden. Dabei handelt es sich um zugeschnittene, also in ihrer Länge und Breite vorgegebene Blätter.

Mittels eines Lineartransportes werden die gestaffelten Schichten 4 bis 10 der rechts dargestellten Pressstation 44 zugeführt und zwischen einem unteren Pressblech 46 und einem oberen Pressblech 48 angeordnet. Mithilfe einer Mehrzahl von Druckzylindern 50 wird das obere Pressblech 48 abgesenkt, so dass die gestapelten Schichten 4 bis 10 unter einem hohen Druck zusammengepresst werden. Da zusätzlich die Pressbleche 46 und 48 vorgeheizt sind, wird zusätzlich zum Druck auch eine erhöhte Temperatur zugeführt. Nach einer vorgegebenen Zeitspanne wird die Pressstation 44 geöffnet und der fertig gestellte Schichtstoff entnommen.

Die Besonderheit der Kurztaktpresse 40 liegt darin, dass die einzelnen Druckzylinder separat angesteuert werden können. Somit ist eine exakte Steuerung des Abstandes zwischen den beiden Pressblechen 46 und 48 möglich, so dass auch dünne Stapel von Schichten des herzustellenden Schichtstoffes mit einer Dicke von weniger als 2 mm verpresst werden können.

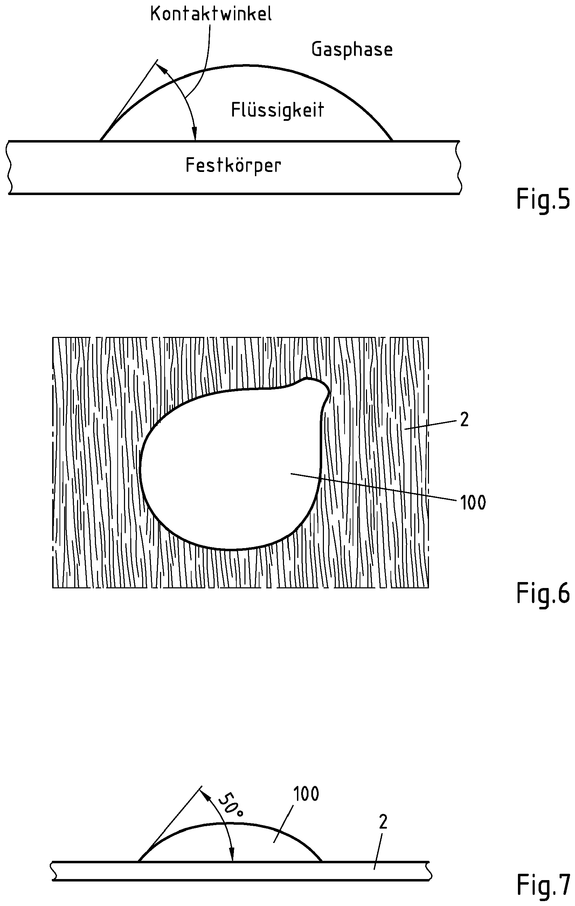

Fig. 5 zeigt ein Prinzipschaubild zur Erläuterung des Begriffs Kontaktwinkel. Auf der Oberfläche des Festkörpers liegt ein Tropfen aus einer Flüssigkeit, der von einer Gasphase, vorzugsweise Luft, umgeben ist. Durch die Oberflächenspannung der Flüssigkeit einerseits und die Oberflächenspannung der Oberfläche des Festkörpers andererseits bildet sich die dargestellte Tropfenform aus. An dem Dreiphasenpunkt, also dort wo die feste Phase, die flüssige Phase und die Gasphase nebeneinander vorliegen, bildet die Oberfläche der Tropfenform einen Winkel mit der Oberfläche des Festkörpers, der als Kontaktwinkel bezeichnet wird. Da die Oberflächenspannung der Flüssigkeit eine Rolle bei der Ausbildung der Tropfenform spielt, kommt es bei der Bestimmung des Kontaktwinkels auch auf die Größe der Fläche, die von der Flüssigkeit auf der Oberfläche des Festkörpers bedeckt wird, an. Daher werden die Flüssigkeit üblicher Weise so dosiert, dass eine vorgegebene Fläche nicht überschritten wird. Beispielsweise sollte bei der Verwendung von Wasser eine Fläche von mehr als 15 mm Durchmesser nicht überschritten werden.

Fig. 6 zeigt eine schematische Darstellung eines Wassertropfens 100 auf der Oberfläche eines geprägten Schichtstoffs 2 in einer schrägen Draufsicht. Der Wassertropfen 100 ist in seiner Kontur scharf abgrenzbar, die umgebenden Abschnitte der Oberfläche sind nicht benetzt und das darunter liegende Material des Schichtstoffs 2 hat keine Feuchtigkeit aufgenommen, was an der gleichmäßigen Färbung der Oberfläche zu erkennen ist.

In Fig. 7 ist eine schematische Darstellung eines Wassertropfens 100 auf der Oberfläche eines geprägten Schichtstoffs 2 in einer Seitenansicht zur Bestimmung des Kontaktwinkels dargestellt.

Zur Bestimmung des Kontaktwinkels kann beispielsweise die Tropfenkonturanalyse (Drop Shape Analysis, DSA) angewendet werden. Die Tropfenkonturanalyse ist eine Bildanalysemethode zur Bestimmung des Kontaktwinkels aus der Seitenansicht oder aus dem Schattenbild eines liegenden Tropfens auf der Oberfläche. Dazu wird ein Tropfen auf eine feste Oberfläche dosiert (liegender Tropfen). Mit Hilfe einer Kamera wird ein Bild des Tropfens aufgenommen.

Für eine grobe, meist schon ausreichende Analyse kann direkt im Bild der Winkel zwischen der Flüssigkeitsoberfläche und der Oberfläche des Schichtstoffs mit einem Lineal bestimmt werden. Vorliegend wurde in dieser Weise in Fig. 7 mit Hilfe eines Lineals der Kontaktwinkel zu 50° bestimmt.

Bei einer genaueren Analyse kann das Bild in eine Tropfenkonturanalyse-Software übertragen werden. Anhand einer Graustufenanalyse des Bildes wird zunächst eine Konturerkennung durchgeführt. Im zweiten Schritt wird mit einer mathematischen Methode ein die Tropfenkontur beschreibendes, geometrisches Modell an die Kontur gefittet. Der Kontaktwinkel ergibt sich dann aus dem Winkel zwischen der ermittelten Tropfenkontur-Funktion und der Probenoberfläche, deren Projektion im Tropfenbild als Basislinie bezeichnet wird.

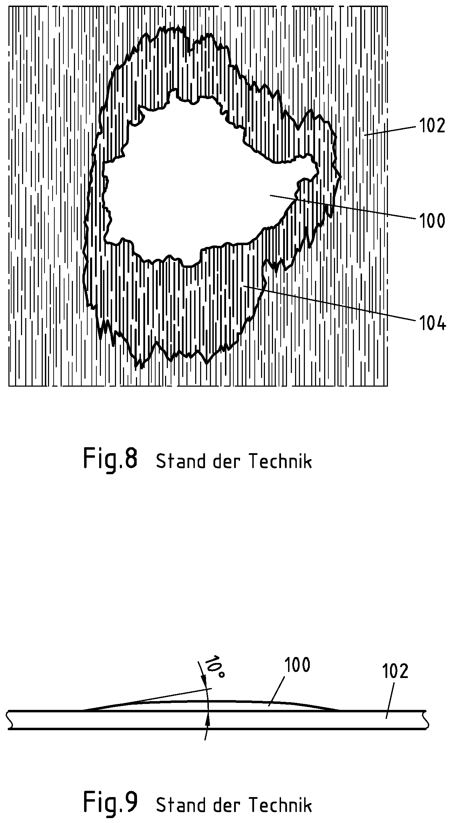

Fig. 8 zeigt eine schematische Darstellung eines Wassertropfens 100 auf einer geschliffenen Oberfläche eines Schichtstoffs 102 in einer schrägen Draufsicht, also auf einer Probe, wie sie aus dem Stand der Technik bekannt ist. Im Unterschied zu Fig. 6 ist der aufliegende Tropfen 100 nicht mehr scharf abgrenzbar und der Tropfen 100 hat eine flachere Form als in Fig. 6 dargestellt ist. Zudem sind die den Tropfen 100 umliegenden Abschnitte 104 der Oberfläche dadurch feucht geworden, dass ein Teil des Wassers des Tropfens 100 vom Schichtstoff 102 aufgenommen worden ist. Die Nässe zeigt sich durch die dunkle Verfärbung im Vergleich zu der deutlich helleren weiteren Umgebung der Oberfläche.

In Fig. 9 ist eine schematische Darstellung eines Wassertropfens auf einer geschliffenen Oberfläche eines Schichtstoffs 102 in einer Seitenansicht zur Bestimmung des Kontaktwinkels. Wie sich schon aus Fig. 8 ergibt, weist der Tropfen 100 eine flachere Form auf und der Kontaktwinkel wurde in der Photographie mit einem Lineal zu 10° bestimmt.

Für die dargestellten Versuche nach den Fig. 6 bis 9 wurde Leitungswasser mit den folgenden physikalischen und chemischen Eigenschaften verwendet:
- Wassertemperatur 20°C (Raumtemperatur)
- pH-Wert 7,5
- Elektrische Leitfähigkeit bei 25 °C: 709 µS/cm
- Karbonathärte: 11,0 °dH
- Gesamthärte: 13,4 °dH mit einerErdalkalisumme von 2,4 mmol/l
- Nitrat NO₃⁻: 12 mg/l
- Nitrit NO₂⁻: < 0,02 mg/l
- Phosphat (gesamt): PO₄³⁻: 1,2 mg/l
- Kieselsäure SiO₂: 8,8 mg/l
- Fluorid F⁻: 0,13 mg/l
- Chlorid Cl⁻: 74 mg/l
- Sulfat SO₄²⁻: 59 mg/l
- Hydrogencarbonat HCO₃⁻: 213 mg/l mg/l
- Natrium Na⁺: 35 mg/l
- Magnesium Mg²⁺: 11 mg/l
- Calcium Ca²⁺: 79 mg/l
- Kalium K⁺: 4 mg/l

Die Tropfengröße wurde so dosiert, dass der Tropfen eine Fläche mit einem Durchmesser von ca. 10 bis 15 mm, bei den geschliffenen Schichtstoffen nach Fig. 8 und 9 zu Beginn vor dem Zerfließen aufwies.

## Patentansprüche

1. Schichtstoff zum Aufbringen auf einem Trägermaterial, insbesondere auf eine Trägerplatte,
- mit einer harzimprägnierten Dekorschicht (4) und
- mit mindestens einer harzimprägnierten Kernschicht (6,8,10),
- wobei die Dekorschicht (4) und die mindestens eine Kernschicht (6, 8,10) geeignet sind, um unter hohem Druck und Wärme mittels einer Vielkolben-Kurztaktpresse (40) miteinander verpresst zu werden,
**dadurch gekennzeichnet,**
- **dass** die Dicke des Stapels der Dekorschicht (4) und der mindestens einen Kernschicht (6, 8, 10) nach dem Verpressen weniger als 2 mm beträgt und
- **dass** die Dekorschicht (4) und die mindestens eine Kernschicht (6,8,10) eine Breite von mehr als 1800 mm aufweisen.

2. Schichtstoff nach Anspruch 1,
**dadurch gekennzeichnet,**
**dass** die Dekorschicht,(4) und die mindestens eine Kernschicht (6, 8, 10) eine Länge von bis zu 5600 mm aufweisen.

3. Schichtstoff nach Anspruch 1 oder 2,
**dadurch gekennzeichnet,**
**dass** die Dicke des Stapels der Dekorschicht (4) und der mindestens einen Kernschicht (6, 8,10) nach dem Verpressen weniger als 1,5 mm beträgt.

4. Schichtstoff nach einem der Ansprüche 1 bis 3,
**dadurch gekennzeichnet,**
**dass** die Oberfläche der der Dekorschicht (4) gegenüberliegend angeordneten Schicht (10,12) mit einer geprägten Struktur versehen ist,
**dass** die geprägte Struktur in Tiefe und Geometrie einer durch Schleifen hergestellten Struktur entspricht und
**dass** die Geometrie der geprägten Struktur einer Schleifriefenstruktur entspricht.

5. Schichtstoff nach Anspruch 4,
**dadurch gekennzeichnet,**
**dass** ein Leitungswassertropfens bei Raumtemperatur mit einem maximalen Durchmesser von 15 mm mit der die geprägte Struktur aufweisenden Schicht einen Kontaktwinkel oberhalb von 40°, insbesondere oberhalb von 50° annimmt.

6. Schichtstoff nach Anspruch 4 oder 5,
**dadurch gekennzeichnet,**
**dass** die Tiefe der geprägten Struktur eine mittlere Rauigkeit von kleiner als 20 µm, insbesondere kleiner 10 µm aufweist.

7. Schichtstoff nach einem der Ansprüche 4 bis 6,
**dadurch gekennzeichnet,**
**dass** die Geometrie der geprägten Struktur einer Schleifriefen-Struktur, insbesondere aus parallel gerichteten Riefen, entspricht.

8. Schichtstoff nach einem der Ansprüche 4 bis 7,
**dadurch gekennzeichnet,**
**dass** die der als Dekorpapier ausgebildeten Dekorschicht (4) gegenüberliegend angeordnete Schicht (12) als ein in seinen Eigenschaften im Wesentlichen dem Dekorpapier entsprechenden Gegenzugpapier ausgebildet ist.

9. Schichtstoff nach Anspruch 8,
**dadurch gekennzeichnet,**
**dass** die dem Dekorpapier (4) gegenüberliegend angeordnete Schicht (12) mit einem Harz imprägniert ist, das in seinem Zugverhalten dem Harz entspricht, das für die Imprägnierung des Dekorpapiers (4) angewendet wird, das vorzugsweise vom gleichen Typ ist.

10. Verfahren zur Herstellung eines Schichtstoffs,
- bei dem eine harzimprägnierte Dekorschicht und mindestens eine harzimprägnierte Kernschicht aufeinander geschichtet werden und
- bei dem die Dekorschicht und die mindestens eine Kernschicht unter hohem Druck und Wärme mit einer einstufigen Vielkolben-Kurztaktpresse miteinander verpresst werden,
**dadurch gekennzeichnet,**
- **dass** die Dicke des Stapels der Dekorschicht (4) und der mindestens einen Kernschicht (6, 8,10) nach dem Verpressen weniger als 2 mm beträgt und
- **dass** die Dekorschicht und die mindestens eine Kernschicht eine Breite von mehr als 1800 mm aufweisen.

11. Verfahren nach Anspruch 10,
bei dem die Oberfläche der der Dekorschicht gegenüberliegend angeordneten Schicht mit einem Pressmittel mit einer Struktur verpresst und geprägt wird, bei dem die geprägte Struktur in Tiefe und Geometrie einer durch Schleifen hergestellten Struktur entspricht und
bei dem die Geometrie der geprägten Struktur einer Schleifriefenstruktur entspricht.

## Claims

1. Laminate to be applied to a carrier material, in particular to a carrier plate, comprising
- a resin-impregnated decorative layer (4) and
- at least one resin-impregnated core layer (6, 8, 10),
- wherein the decorative layer (4) and the at least one core layer (6, 8, 10) are suitable for being pressed together by a multi-piston short-cycle press (40) under high pressure and heat,
**characterised in that**
- after pressing, the thickness of the stack of the decorative layer (4) and of the at least one core layer (6, 8, 10) is less than 2 mm, and
- the decorative layer (4) and the at least one core layer (6, 8, 10) have a width of more than 1800 mm.

2. Laminate according to Claim 1,
**characterised in that**
the decorative layer (4) and the at least one core layer (6,8,10) have a length of up to 5600 mm.

3. Laminate according to Claim 1 or 2,
**characterised in that**
after pressing, the thickness of the stack of the decorative layer (4) and of the at least one core layer (6, 8, 10) is less than 1.5 mm.

4. Laminate according to any one of Claims 1 to 3,
**characterised in that**
the surface of the layer (10,12) which is arranged opposite the decorative layer (4) is provided with an embossed structure,
the embossed structure corresponds in depth and geometry to a structure produced by grinding, and
the geometry of the embossed structure corresponds to a grinding groove structure.

5. Laminate according to Claim 4,
**characterised in that**
a drop of tap water at room temperature having a maximum diameter of 15 mm forms a contact angle of more than 40°, in particular of more than 50° with the layer having the embossed structure.

6. Laminate according to Claim 4 or 5,
**characterised in that**
the depth of the embossed structure has a mean roughness of less than 20 µm, in particular of less than 10 µm.

7. Laminate according to any one of Claims 4 to 6,
**characterised in that**
the geometry of the embossed structure corresponds to a grinding groove structure, in particular consisting of parallel running grooves.

8. Laminate according to any one of Claims 4 to 7,
**characterised in that**
the layer (12) arranged opposite the decorative layer (4), formed as decorative paper, is formed as a counteracting paper which substantially corresponds in its characteristics to the decorative paper.

9. Laminate according to Claim 8,
**characterised in that**
the layer (12) arranged opposite the decorative layer (4) is impregnated with a resin which corresponds in its tensile behaviour to the resin which is used for impregnating the decorative paper (4) which is preferably of the same type.

10. Method for producing a laminate, wherein
- a resin-impregnated decorative layer and at least one resin-impregnated core layer are layered on top of one another, and
- the decorative layer and the at least one core layer are pressed together using a single-stage multi-piston short-cycle press under high pressure and heat, **characterised in that**
- after pressing, the thickness of the stack of the decorative layer (4) and of the at least one core layer (6, 8, 10) is less than 2 mm, and
- the decorative layer and the at least one core layer have a width of more than 1800 mm.

11. Method according to Claim 10,
wherein
using a pressing means, the surface of the layer arranged opposite the decorative layer is pressed and embossed with a structure,
the embossed structure corresponds in depth and geometry to a structure produced by grinding, and
the geometry of the embossed structure corresponds to a grinding groove structure.

## Revendications

1. Matériau stratifié, destiné à être appliqué sur un matériau de support, en particulier sur une plaque de support,
- avec une couche décorative imprégnée de résine (4) et
- avec au moins une couche de coeur imprégnée de résine (6, 8, 10)
- sachant que la couche décorative (4) et l'au moins une couche de coeur (6, 8, 10) sont aptes à être pressées ensemble à haute pression ou à chaud au moyen d'une presse à pistons multiples, à cycle court (40),
**caractérisé en ce que**
l'épaisseur de la couche décorative (4) et de l'au moins une couche de coeur (6, 8, 10) empilées est inférieure à 2 mm après la compression et que la couche décorative (4) et l'au moins une couche de coeur (6, 8, 10) présentent une largeur de plus de 1800 mm.

2. Matériau stratifié selon la revendication 1,
**caractérisé en ce que**
la couche décorative (4) et l'au moins une couche de coeur (6, 8, 10) présentent une longueur allant jusqu'à 5600 mm.

3. Matériau stratifié selon revendication 1 ou 2,
**caractérisé en ce que**
l'épaisseur de la couche décorative (4) et de l'au moins une couche de coeur (6, 8, 10) empilées est inférieure à 1,5 mm après la compression.

4. Matériau stratifié selon l'une des revendications 1 à 3,
**caractérisé en ce que**
la surface de la couche (10, 12) disposée à l'opposé de la couche décorative (4) est pourvue d'un structure estampée,
la structure estampée correspond à une structure réalisée par usinage, en ce qui concerne la profondeur et la géométrie.

5. Matériau stratifié selon la revendication 4,
**caractérisé en ce que**,
à la température ambiante, une goutte d'eau de conduite, avec un diamètre maximal de 15 mm, entre en contact avec la couche dotée de la structure estampée, sous un angle supérieur à 40°, en particulier supérieur à 50°.

6. Matériau stratifié selon revendication 4 ou 5,
**caractérisé en ce que**
la profondeur de la structure estampée présente une rugosité moyenne inférieure à 20 µm, de préférence inférieure à 15 µm.

7. Matériau stratifié selon l'une des revendications 4 à 6,
**caractérisé en ce que**
la géométrie de la structure estampée correspond à une structure striée à la meule, consistant en particulier en des stries orientées parallèlement.

8. Matériau stratifié selon l'une des revendications 4 à 7,
**caractérisé en ce que**
la couche (12) disposée à l'opposé de la couche décorative (4), réalisée en tant que papier décoratif, est réalisée en forme de papier de contretraction, correspondant sensiblement au papier décoratif en ce qui concerne ses propriétés.

9. Matériau stratifié selon la revendication 8,
**caractérisé en ce que**
la couche (12) disposée à l'opposé de la couche décorative (4) est imprégnée d'une résine qui, en ce qui concerne son comportement à la traction, correspond à la résine utilisée pour l'imprégnation du papier décoratif (4), qui est de préférence du même type.

10. Procédé de fabrication d'un matériau stratifié,
dans lequel une couche décorative imprégnée de résine et au moins une couche de coeur imprégnée de résine sont pressées ensemble à haute pression ou à chaud au moyen d'une presse à pistons multiples, à cycle court,
**caractérisé en ce que**
l'épaisseur de la couche décorative (4) et de l'au moins une couche de coeur (6, 8, 10) empilées est inférieure à 2 mm après la compression et que la couche décorative et l'au moins une couche de coeur présentent une largeur de plus de 1800 mm.

11. Procédé selon la revendication 10,
dans lequel la surface de la couche disposée à l'opposé de la couche décorative est pressée et pourvue d'une structure estampée,
dans lequel la structure estampée correspond à une structure réalisée à la meule, en ce qui concerne la profondeur et la géométrie et
dans lequel la géométrie de la structure estampée correspond à une structure striée obtenue par usinage.
